# EUROPÄISCHE PATENTSCHRIFT

(11) **EP 3 256 660 B1**
(45) Veröffentlichungstag und Bekanntmachung des Hinweises auf die Patenterteilung: **29.12.2021**
(21) Anmeldenummer: 16703118.6
(22) Anmeldetag: 05.02.2016
(51) Int. Cl.: E04B 2/74, E04B 2/82, E04B 1/68, C09K 21/14, E04B 1/94, C09J 7/26

(54) **FUGENDICHTUNGSELEMENT UND DICHTANORDNUNG MIT DERARTIGEM FUGENDICHTUNGSELEMENT**
JOINT-SEALING ELEMENT AND SEALING ASSEMBLY COMPRISING SUCH A JOINT-SEALING ELEMENT
ÉLÉMENT D'ÉTANCHÉITÉ DE JOINTURE ET DISPOSITIF D'ÉTANCHÉITÉ COMPRENANT UN ÉLÉMENT D'ÉTANCHÉITÉ DE JOINTURE DE CE TYPE

(30) Priorität: 13.02.2015 EP 15155102
(43) Veröffentlichungstag der Anmeldung: 20.12.2017
(73) Patentinhaber: Hilti Aktiengesellschaft, 9494 Schaan (LI)
(72) Erfinder: GROSSE, Bernd, 6800 Feldkirch (AT); FÖRG, Christian, 86862 Dillishausen (DE)
(74) Vertreter: Hilti Aktiengesellschaft Corporate Intellectual Property
(86) Internationale Anmeldenummer: PCT/EP2016/052448
(87) Internationale Veröffentlichungsnummer: WO 2016/128300

(56) Entgegenhaltungen:
- EP-A2- 2 505 737
- DE-B1- 2 645 807
- US-A- 2 347 158
- US-A1- 2011 011 019
- US-B1- 7 240 905

## Beschreibung

### GEBIET DER ERFINDUNG

Die vorliegende Erfindung betrifft ein Fugendichtungselement zum brandsicheren Verschließen von Fugen an einer Baukonstruktion und/oder an einem Bauwerk, insbesondere zum Verschließen gegen Feuer und Rauch. Im Speziellen betrifft die Erfindung die rauchsichere und/oder brandsichere Abdichtung von Anschlussfugen, bei Trockenbauwänden, vor allem von Bewegungsfugen als Sichtfuge.

### HINTERGRUND DER ERFINDUNG

Anschlussfugen entstehen in der Regel, wenn unterschiedliche Bauteile aufeinander treffen. Anschlussfugen befinden sich im Anschlussbereich zur Geschossdecke, zum Fußboden und zu Massivwänden. Durch Gewichtsbelastung und/oder thermische Einflüsse kann es bei Gebäuden zu einem Senken oder Heben der Decke kommen. Um Beschädigungen der Trockenbauwand zu vermeiden, wird in diesem Fall die obere Anschlussfuge als Bewegungsfuge ausgeführt. Als Bewegungsfugen werden daher Fugen zur Unterbrechung von Bauteilen bezeichnet, um Spannungsrissen vorzubeugen. Das Deckenprofil wird derart ausgeführt, dass eine Relativbewegung zwischen Deckenprofil und den senkrechten Wandkomponenten möglich ist.

Des Weiteren werden an diese Anschlussfuge optische Anforderungen gestellt, da die Fuge nach Fertigstellung der Baukonstruktion und/oder des Bauwerks weiterhin sichtbar bleiben soll und den architektonischen Baustil mit integrierten Brandschutzanforderungen komplettieren soll.

Im Allgemeinen wird auf die Anschlussbauteile der Baukonstruktion und/oder des Bauwerks ein U-Profil befestigt, welches Teil des Ständerwerkes ist. Die Gipskartonplatten selber werden mit einem definierten Abstand zum Anschlussbauteil angebracht. Üblicherweise erfolgt die Abdichtung des Systems im Spalt zwischen Gipskartonplatte und Decke. Hierzu wird entweder eine geeignete Dichtmasse eingebracht oder aber der Spalt mit Mineralwolle gefüllt und an der Oberfläche mit einer abdichtenden Schicht versehen. In beiden Fällen behindert das in der Fuge befindliche Material die Bewegung relativ stark, mit der Konsequenz, dass zur Erzielung einer ausreichenden Bewegungsaufnahme mit verhältnismäßig großen Fugenbreiten gearbeitet werden muss.

Insbesondere die Abdichtung des Spaltes mit Dichtmasse hat einige Nachteile. Sie ist besonders arbeitsintensiv und die Abdichtung neigt im Laufe der Zeit zu Rissbildung bei Überbeanspruchung. Ferner kann die Abdichtung erst nach Montage der Gipskartonplatten erfolgen und erfordert beidseitigen Zugang zu der fertig gestellten Trockenbauwand. Darüber hinaus ist diese Vorgehensweise fehleranfällig, da der Anwender selber die richtige Menge an Material dosieren muss, um den Spalt ausreichend abzudichten. Darüber hinaus muss der Trockenbauer die Fuge, entsprechend dem Material und Dehneigenschaften der Dichtmasse, in der Breite dimensionieren. Bei der Installation der Dichtmasse kann dann nur noch die Fuge gefüllt werden. Bei einer Ausdehnung des Spaltes muss gewährleistet sein, dass die Dichtmasse ausreichend stark am Untergrund haftet und die entstehenden Zugkräfte aufnehmen kann. Häufig ist das nicht der Fall und es besteht die Gefahr des Ablösens der Dichtmasse vom Untergrund oder aber die Dichtmasse selber wird überbeansprucht und reißt. Im Falle einer Verringerung des Spaltes kann die Dichtmasse aufgrund ihrer Materialeigenschaften nur begrenzt komprimiert werden und es besteht die Gefahr, dass sie bei falsch dimensionierter Fuge aus dem Spalt gedrückt wird. Aufgrund des begrenzten Dehn- und Komprimiervermögens der Dichtmasse (max. +/- 25%) kommt der ausreichend großen Dimensionierung des Abstandes zwischen Gipskartonplatte und Decke eine große Bedeutung zu. Dies wird häufig unterschätzt, bei der Verwendung von gewöhnlichen Dichtmassen kann daher eine ausreichende Dichtigkeit oft nicht gewährleistet werden.

Zum Abdichten von Fugen existieren einige weitere Lösungen, insbesondere Fugenschnüre oder Fugensprays, die zum Teil dieselben Nachteile haben, wie sie für die Dichtmassen beschrieben wurden.

US 7,240,905 B1 beschreibt ein bewegliches Fugendichtungselement, das jedoch nicht zum brandsicheren Verschließen einer Anschlussfuge geeignet ist. US 2013/0091790 A1 beschreibt ein Fugendichtungselement, das zwischen U-Profil und Gipskartonplatte befestigt wird, jedoch aufgrund der geometrischen Ausgestaltung und aufwendiger Montage sich nicht für eine Anwendung bei einer Sichtfuge eignet. US 7,654,049 B2 beschreibt ein Kunststoffprofil als eine Deckleiste für eine Deckenfuge, jedoch ohne Brandschutzfunktion. Ferner existieren vorgefertigte Lösungen zum brandsicheren Verschließen von Anschlussfugen beispielsweise in Form von Trockenbauprofilen mit aufgeklebten intumeszierenden Bändern oder in Form von intumeszierenden Streifen, die auf das Profil aufgelegt werden. Nachteilig bei der Verwendung von Fugendichtungselementen aus intumeszierenden Materialien ist, dass, bedingt durch die Additive, das Polymer beeinflusst wird. Demnach treten Veränderungen in Farbe und Elastizität des Grundmaterials auf. Bei Deckleisten muss für die Brandschutzfunktion noch ein zweites Produkt, wie beispielweise eine brandschutzsichere Dichtmasse, zusätzlich installiert werden.

Alle oben genannten Systeme haben jedoch den Nachteil, dass sie entweder nur zum brandsicheren Verschließen einer Anschlussfuge oder nur als Sichtfuge angewandt werden können. Keines, der aus dem Stand der Technik bekannten Systeme, stellt ein Fugendichtungselement als perfekte Sichtfuge, das zur Bewegungsaufnahme geeignet ist, mit zusätzlicher Brandschutzfunktion bereit, das zudem einfacher und sicherer anzuwenden ist, die Montage weiterer Bauteile vereinfacht, eine gute Abdichtung bereits bei seiner Anwendung gewährleistet und eine hervorragende Dichtigkeit bei maximaler Bewegungsaufnahme gewährleistet.

Aus der US 2011011019 A1 ist eine Dichtung bekannt, die zur Abdichtung einer oberen Kante einer Gipsplatte vorgesehen ist. Die Dichtung weist einen Dichtungsschenkel, der sich von dem Schenkelabschnitt nach außen erstreckt und eine intumeszierende Komponente enthält, auf.

Aus der EP 2 505 737 A2 ist eine Anputzleiste für eine Putzschicht bekannt. Die Anputzleiste umfasst einen Basisbereich mit einem Expansionsstreifen, einen vorragenden Einputzschenkel zum Einbetten in die Putzschicht und wenigstens ein Fixiermittel, das sich durch eine Öffnung im Einputzschenkel hindurch in eine Wärme- und/oder Schalldämmung erstreckt und die Anputzleiste an der Wärme- und/oder Schalldämmung fixiert.

Aufgabe der Erfindung ist es daher, ein Fugendichtungselement bereitzustellen, bereitzustellen, dass sich zum brandsicheren Verschließen einer Fuge an einer Baukonstruktion und/oder an einem Bauwerk, insbesondere zum brandsicheren Verschließen einer Fuge zwischen einem ersten Bauteil und einem zweiten Bauteil, eignet, sich gut komprimieren und verformen lässt, mit dem sich ein verbesserter Ausgleich von Unebenheiten, ein verbesserter Einbau, sowie eine verbesserte Abdichtung, erzielen lässt und welches gleichzeitig als Sichtfuge dient.

Eine weitere Aufgabe der vorliegenden Erfindung ist es, ein Verfahren zur brandsicheren Abdichtung einer solchen Fuge bereitzustellen, das einfach durchzuführen ist und mit geringerem Arbeitsaufwand zuverlässig und fehlerfrei zur Abdichtung einer Fuge, insbesondere eine Sichtfuge, zwischen zwei aneinander anliegenden Bauteilen einer Baukonstruktion und/oder eines Bauwerkes führt.

Eine noch weitere Aufgabe der vorliegenden Erfindung ist es, eine Anordnung bereitzustellen, die im Brandfall eine bessere Abdichtung einer Fuge, wie eine Sichtfuge, zwischen zwei Bauteilen, insbesondere zwischen einer Trockenbauwand und einem Anschlussbauteil, wie eine Wand, eine Decke oder ein Boden, ermöglicht und so eine bessere und dauerhafte Abdichtung gegenüber Rauch und einen besseren und dauerhaften Brandschutz bereitstellt und mit geringerem Arbeitsaufwand zuverlässig und fehlerfrei montiert werden kann.

Diese und weitere Aufgaben, die aus der folgenden Beschreibung der Erfindung ersichtlich sind, werden durch die vorliegende Erfindung, wie sie in den unabhängigen Ansprüchen beschrieben ist, gelöst. Die abhängigen Ansprüche beziehen sich auf bevorzugte Ausführungsformen.

Die vorliegende Erfindung betrifft ein Fugendichtungselement zum brandsicheren Verschließen einer Fuge an einer Baukonstruktion und/oder an einem Bauwerk, insbesondere zum brandsicheren Verschließen einer Fuge zwischen einem ersten Bauteil und einem zweiten Bauteil, wobei das Fugendichtungselement ein Trägerelement und ein an dieses Trägerelement angeordnetes Dichtprofil umfasst, wobei das angeordnete Dichtprofil aus einem verformbaren Material besteht und ein intumeszierfähiges Material umfasst. Erfindungsgemäß ist vorgesehen, dass das Dichtprofil ein Vollprofil oder Hohlprofil aufweist, wobei das Dichtprofil über seinem vollen Umfang von einer Kunststofffolie umgeben ist, die das Dichtprofil an das Trägerelement befestigt, wobei das Dichtprofil aus einem komprimierbaren, intumeszierenden Schaumstoff besteht, der Brandschutzadditive enthält, wobei das Trägerelement aus Kunststoff ist.

Bevorzugt ist das Dichtprofil am äußeren Rand des Trägerelements angeordnet.

Die vorliegende Erfindung betrifft weiter ein Verfahren zur brandsicheren Abdichtung einer Fuge zwischen zwei aneinander anliegenden Bauteilen einer Baukonstruktion und/oder eines Bauwerkes mit wenigstens einem ersten Bauteil, einem zweiten Bauteil und dem erfindungsgemäßen Fugendichtungselement.

Die vorliegende Erfindung betrifft weiter eine Dichtanordnung zur brandsicheren Abdichtung einer Fuge zwischen zwei aneinander anliegenden Bauteilen einer Baukonstruktion und/oder eines Bauwerkes, mit wenigstens einem ersten Bauteil, einem zweiten Bauteil und dem vorher beschriebenen Fugendichtungselement, wobei das Dichtprofil im äußeren Bereich der Fuge positioniert und dazu konfiguriert ist, die Fuge von außen abzudichten.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch Bezugnahme auf die folgenden Figuren beschrieben:

### KURZE BESCHREIBUNG DER FIGUREN

**Figur 1** zeigt eine skizzierte perspektivische Ansicht eines Fugendichtungselements gemäß einer Ausführungsform der vorliegenden Erfindung, wobei das Dichtprofil ein Vollprofil und Rundprofil aufweist und das Trägerelement einen Befestigungsbereich.
**Figur 2** zeigt eine skizzierte Dichtanordnung mit einem Fugendichtungselement gemäß einer Ausführungsform der vorliegenden Erfindung, wobei das Dichtprofil ein Vollprofil und Ovalprofil aufweist.
**Figur 3** zeigt eine skizzierte Dichtanordnung mit einem Fugendichtungselement gemäß einer nicht erfindungsgemäßen Ausführungsform, wobei das Dichtprofil ein Hohlprofil und Ovalprofil aufweist mit einem intumeszierenden Streifen.
**Figur 4** zeigt eine skizzierte Dichtanordnung mit einem Fugendichtungselement gemäß einer Ausführungsform der vorliegenden Erfindung, wobei das Dichtprofil eine Dichtlippe umfasst, die mit intumeszierendem Schaumstoff hinterfüllt ist.
**Figur 5** zeigt eine skizzierte Dichtanordnung mit einem Fugendichtungselement gemäß einer nicht erfindungsgemäßen Ausführungsform, wobei das Dichtprofil eine Dichtlippe umfasst, die mit einem intumeszierenden Streifen beschichtet ist.
**Figur 6** zeigt eine skizzierte Dichtanordnung mit einem Fugendichtungselement gemäß einer Ausführungsform der vorliegenden Erfindung, wobei das Dichtprofil ein Vollprofil und Ovalprofil aufweist und mit einer abtrennbaren Anspachtelkante versehen ist.
**Figur 7** zeigt eine skizzierte perspektivische Ansicht einer Dichtanordnung mit der in

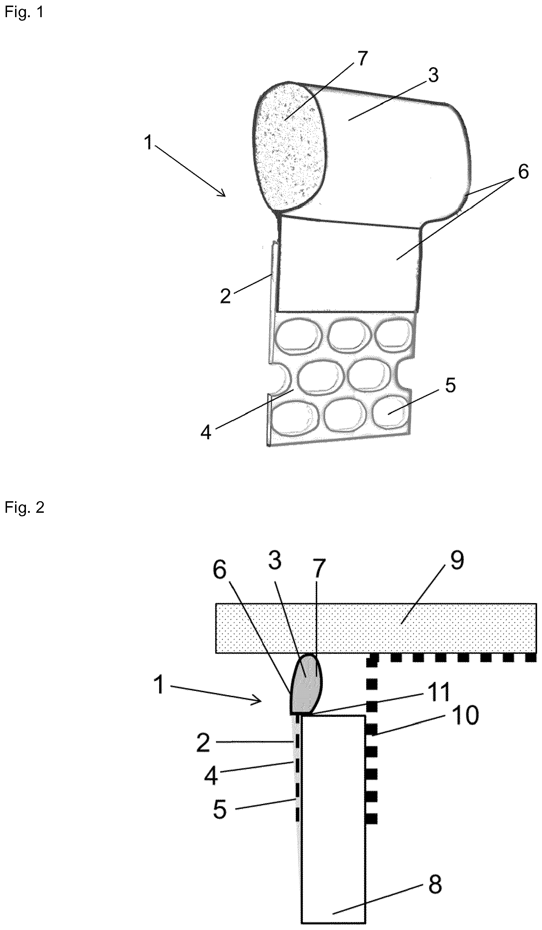

Figur 1 gezeigten Ausführungsform eines erfindungsgemäßen Fugendichtungselements.

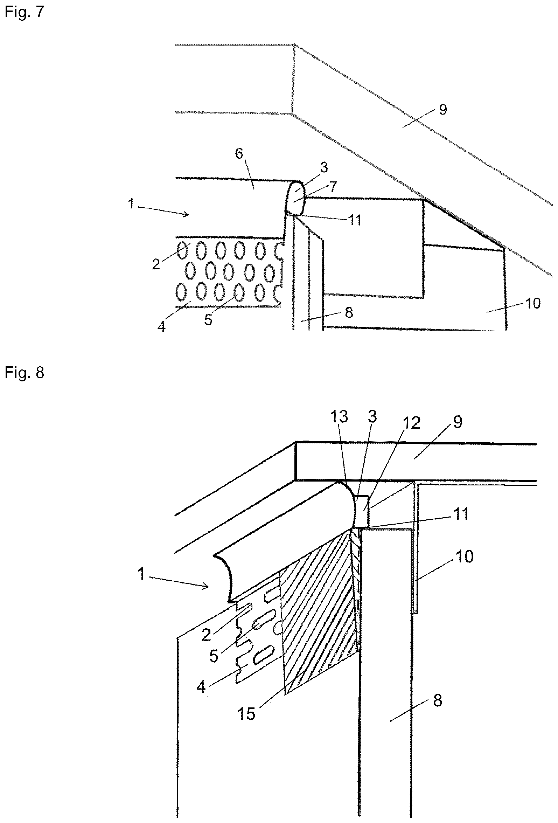

**Figur 8** zeigt eine skizzierte perspektivische Ansicht einer Dichtanordnung mit der in

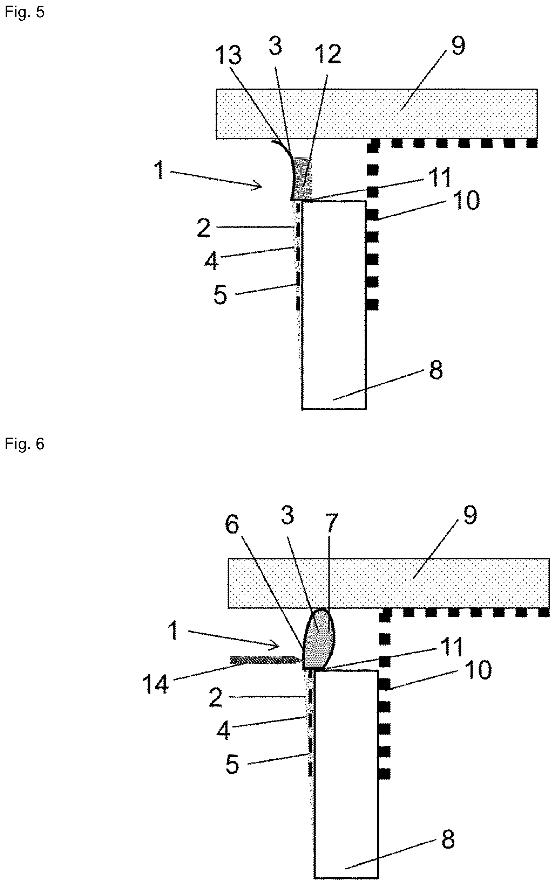

Figur 5 gezeigten Ausführungsform eines nicht erfindungsgemäßen Fugendichtungselements.

### AUSFÜHRLICHE BESCHREIBUNG DER ERFINDUNG

Die folgenden Begriffe werden im Rahmen der vorliegenden Erfindung verwendet:

Der Begriff "Geometrie / Geometrien" im Rahmen der vorliegenden Erfindung umfasst verschiedene Querschnittsarten und Querschnittsformen. Dies bedeutet, dass insbesondere das Dichtprofil unterschiedliche Querschnittsarten und Querschnittsformen aufweisen kann. Unter Querschnittsarten werden u.a. Rundprofil (runder Querschnitt), Ovalprofil (ovaler Querschnitt), Keilprofil (keilförmiger Querschnitt), Mehreckprofil (mehreckiger Querschnitt), insbesondere Quadratprofil (quadratischer Querschnitt), Rechteckprofil (rechteckiger Querschnitt), Parallelogrammprofil (Querschnitt in Form eines Parallelogramms), Dreieckprofil (dreieckiger Querschnitt), etc., verstanden. Unter Querschnittsformen werden u.a. Vollprofil und Hohlprofil verstanden, wobei beim Vollprofil das Dichtprofil vollständig aus Dichtmaterial besteht, wohingegen beim Hohlprofil das Dichtprofil nur teilweise aus Dichtmaterial besteht.

Der Begriff "verformbar" im Rahmen der vorliegenden Erfindung bedeutet, dass Unebenheiten im Bauteil ausgeglichen werden können, gegen das das Dichtprofil gepresst wird. "Plastisch verformbar" bedeutet dabei, dass das Dichtprofil verformbar ist und nach der Verformung nicht wieder in seine ursprüngliche Form zurückkehrt. "Elastisch verformbar" bedeutet dabei, dass das Dichtprofil verformbar ist und nach der Verformung wieder in seine ursprüngliche Form zurückkehrt, d.h. dass das Material sich zu einem gewissen Grad reversibel verformen lässt.

Die Begriffe "aufweisen", "mit" und "haben" sollen einschließend sein und bedeuten, dass auch andere als die genannten Elemente gemeint sein können.

Der Begriff "Intumeszenz" im Rahmen der vorliegenden Erfindung bedeutet dabei, dass unter Einwirkung von Hitze, beispielsweise im Brandfall, sich das Material aufbläht und eine isolierende Schicht aus schwerentflammbarem Material bildet, also intumesziert.

Unter "langsam abbrennenden Schaumstoff" wird im Rahmen der vorliegenden Erfindung ein Schaumstoff verstanden, der keine Möglichkeit der Brandausbreitung durch den Schaumstoff bietet, nicht eigenentflammbar ist und auch nicht abtropft.

Im "äußeren Bereich der Fuge positioniert" bedeutet, dass das Dichtprofil dabei insbesondere seitlich an einer oberen, äußeren Abschlusskante des ersten Bauteils, vorzugsweise einer Trockenbauwand, angeordnet ist.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben. In einem Aspekt betrifft die vorliegende Erfindung ein Fugendichtungselement zum brandsicheren Verschließen einer Fuge an einer Baukonstruktion und/oder an einem

Bauwerk mit den Merkmalen des Anspruchs 1. In einem weiteren Aspekt betrifft die vorliegende Erfindung ein Verfahren zur brandsicheren Abdichtung einer Fuge zwischen zwei aneinander anliegenden Bauteilen einer Baukonstruktion und/oder eines Bauwerkes mit den Merkmalen des Anspruchs 10.

In einem weiteren Aspekt betrifft die vorliegende Erfindung eine Dichtanordnung zur brandsicheren Abdichtung einer Fuge zwischen zwei aneinander anliegenden Bauteilen einer Baukonstruktion und/oder eines Bauwerkes, mit wenigstens einem ersten Bauteil, einem zweiten Bauteil und dem erfindungsgemäßen Fugendichtungselement, wobei das Dichtprofil im äußeren Bereich der Fuge positioniert und dazu konfiguriert ist, die Fuge von außen abzudichten.

Es wurde herausgefunden, dass das erfindungsgemäße Fugendichtungselement sich besonders dazu eignet, in einfacher Weise eine Bauwerksfuge zwischen zwei aneinandergrenzenden Bauteilen sicher abzudichten, insbesondere gegen Rauch und Feuer, und gleichzeitig als Sichtfuge den architektonischen Baustil mit integrierten Brandschutzanforderungen komplettiert. Damit das Fugendichtungselement seine Funktion erfüllen kann, muss das Dichtprofil des Fugendichtungselements eine vorbestimmte Geometrie aufweisen und ein intumeszierfähiges Material umfassen. Ferner muss das Fugendichtungselement im äußeren Bereich der Fuge positioniert und dazu konfiguriert sein, die Fuge von außen abzudichten.

Daher ist es ein Ziel der vorliegenden Erfindung, das Fugendichtungselement zu beschreiben. Insbesondere ist es Ziel der vorliegenden Erfindung, die Geometrie des Dichtprofils detailliert zu beschreiben. Ferner ist es Ziel der der vorliegenden Erfindung, die Positionierung des Fugendichtungselements, insbesondere eine Dichtanordnung, sowie ein Verfahren zur brandsicheren Abdichtung einer Fuge zwischen zwei aneinander anliegenden Bauteilen einer Baukonstruktion und/oder eines Bauwerkes mit wenigstens einem ersten Bauteil, einem zweiten Bauteil, zu beschreiben.

Das erfindungsgemäße Fugendichtungselement zum brandsicheren Verschließen einer Fuge an einer Baukonstruktion und/oder an einem Bauwerk, insbesondere zur brandsicheren Verschließen einer Fuge zwischen einem ersten Bauteil und einem zweiten Bauteil, wobei das Fugendichtungselement ein Trägerelement und ein an dieses Trägerelement angeordnetes Dichtprofil umfasst, ist dadurch gekennzeichnet, dass das angeordnete Dichtprofil ein intumeszierfähiges Material umfasst. Es ist bevorzugt, dass das Dichtprofil am äußeren Rand des Trägerelements angeordnet ist. Weiterhin weißt das erfindungsgemäße Fugendichtungselement eine vorbestimmte Geometrie auf. Geometrien im Rahmen der vorliegenden Erfindung umfassen, wie oben schon erwähnt, verschiedene Querschnittsarten und Querschnittsformen.

Querschnittsarten des Dichtprofils des Fugendichtungselements gemäß der vorliegenden Erfindung sind Vollprofil und gegebenenfalls Hohlprofil, wobei das Hohlprofil ein geschlossenes oder offenes Hohlprofil sein kann. Vollprofil und Hohlprofil mit großer Profilwandstärke haben den Vorteil, dass am Stoß zweier sich berührender Dichtprofile automatisch keine Lücke entsteht. Hohlprofile können stärker komprimiert werden, und somit mehr Bewegung aufnehmen. Besonders bevorzugt ist, dass das Dichtprofil ein Vollprofil aufweist. Es ist auch bevorzugt, dass das Dichtprofil eine Dichtlippe umfasst, die mit einem intumeszierfähigen Material versehen ist. Bevorzugte Querschnittsformen des Dichtprofils des Fugendichtungselements gemäß der vorliegenden Erfindung sind Rundprofil, Ovalprofil, Keilprofil, Mehreckprofil, insbesondere Rechteckprofil, Quadratprofil, Parallelogrammprofil, und Dreieckprofil. Besonders bevorzugt sind Rundprofil und Ovalprofil, wobei Rundprofil am bevorzugtesten ist. Es sind jedoch auch andere oder gemischte Querschnittsformen denkbar und möglich, solange das Fugendichtungselement nach der Installation des Dichtprofils an die beiden Bauteile angrenzt und die zwischen den Bauteilen bestehende Fuge verschließen kann.

In einer bevorzugten Ausführungsform des erfindungsgemäßen Fugendichtungselements weist das Dichtprofil ein Rundprofil auf.

In einer weiteren, bevorzugten Ausführungsform des erfindungsgemäßen Fugendichtungselements weist das Dichtprofil ein Ovalprofil auf.

In einer besonders bevorzugten Ausführungsform des erfindungsgemäßen Fugendichtungselements weist das Dichtprofil ein Vollprofil und ein Rundprofil auf.

In einer weiteren, besonders bevorzugten Ausführungsform des erfindungsgemäßen Fugendichtungselements weist das Dichtprofil ein Vollprofil und ein Ovalprofil auf.

In einer alternativen Ausführungsform des erfindungsgemäßen Fugendichtungselements umfasst das Dichtprofil eine Dichtlippe, die mit einem intumeszierfähigen Material versehen ist oder aus einem intumeszierfähigen Material besteht.

Die Geometrie des Dichtprofils kann vorgefertigt werden, zum Beispiel durch definiertes Zuschneiden, Extrudieren oder Pressen von geeignetem Dichtmaterial. Vorfertigung direkt aus Flachmaterial, beispielsweise mittels Falten oder Rollen aus einem flachen Ausgangsmaterial, wie zum Beispiel Kunststoff, Kunststofffolie, Gewebe, ein Vlies oder dergleichen ist auch möglich. Die Herstellung solcher Querschnittsarten und Querschnittsformen, ist dem Fachmann bekannt. Bevorzugt ist, dass die Geometrie des Dichtprofils durch definiertes Zuschneiden oder Extrudieren vorgefertigt wird.

Das Dichtprofil kann einstückig aus einem Material oder mehrteilig aus mehreren Materialien bestehen und beispielsweise als Schichtkörper vorliegen. In alternativen Ausführungsformen können der Außenbereich und der Innenbereich eines Dichtprofils separate Bereiche des Dichtprofils definieren, die unterschiedliche Querschnittsformen und/oder Querschnittsarten aufweisen und/oder aus unterschiedlichen Materialien bestehen können.

Erfindungsgemäß besteht das Dichtprofil aus einem verformbaren Material. Das Material kann dabei entweder plastisch oder elastisch verformbar sein. Insbesondere besteht das Dichtprofil zumindest teilweise, bevorzugt vollständig aus einem nach Kompression rückstellfähigen Schaumstoff. Es ist bevorzugt, dass das verformbare Material ein langsam abbrennbarer Schaumstoff. Insbesondere besteht das erfindungsgemäße Dichtprofil aus einem weichen, nach Kompression rückstellfähigen Schaumstoff. Als Schaumstoffmaterial sind übliche Schaumstoffe, wie Polyethylen- und Polyurethanschaumstoff oder Zellkautschuk zu nennen. Der Schaumstoff kann dabei ein offenzelliger Schaumstoff mit sehr geringem Luftdurchtrittswiderstand sein, ebenso ein nahezu geschlossenzelliger Schaumstoff mit extrem geringen Luftdurchtrittswerten. Auch Schaumstoffe mit Luftdurchtrittswerten, die zwischen den beiden oben genannten Extremfällen liegen, können im Rahmen der vorliegenden Erfindung verwendet werden. Der Schaumstoff kann mit einem Imprägnat getränkt sein, das die Dichteigenschaften des Schaumstoffs erhöht. Um Dichtigkeit gegenüber Rauch zu erreichen, sollte zumindest die Außenfläche des Dichtprofils geschlossenporig ausgebildet sein. Alternativ kann ein offenzelliges Dichtprofil mit einer Deckschicht oder Ummantelung, beispielsweise aus einer Folie, insbesondere Kunststofffolie versehen sein. Bevorzugt ist, dass das Dichtprofil aus einem offenzelligen Polyurethanschaumstoff oder aus einem Zellkautschuk besteht.

Es hat sich als vorteilhaft erwiesen, wenn das Dichtprofil aus einem langsam abbrennenden Schaumstoff, wie beispielsweise Zellkautschuk oder Polyurethanschaum, besteht. Bei einem langsam abbrennenden Schaumstoff besteht keine Möglichkeit der Brandausbreitung durch den Schaumstoff. Eine Eigenentflammung ist bei den oben genannten Schaumstoffausgangsmaterialien ausgeschlossen. Vorteilhaft ist, dass im Brandfall auch kein Abtropfen erfolgt. Ein langsam abbrennender Schaumstoff sollte in einem Temperaturbereich zwischen 500°C bis 800°C noch mindestens 20%, noch mindestens 25%, vorzugsweise noch mindestens 30%, zwischen 20% bis 60%, zwischen 20% bis 40%, vorzugsweise zwischen 25% bis 30%, seines Ausgangsvolumens besitzen. Ferner sollte ein langsam abbrennender Schaumstoff in einem Temperaturbereich zwischen 500°C bis 800°C noch mindestens 10%, mindestens 20%, vorzugsweise noch mindestens 30%, zwischen 10% bis 40%, zwischen 10% bis 30%, vorzugsweise zwischen 15% bis 20%, seiner Ausgangsmasse besitzen.

Ferner enthält das Material entsprechende Additive für die Brandschutzeigenschaften, wie beispielsweise Intumeszenz. Unter Einwirkung von Hitze, wie im Brandfall, bläht sich das Material auf und bildet eine isolierende Schicht aus schwerentflammbarem Material. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und werden erfindungsgemäß eingesetzt. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen, gebildet werden. Solche Systeme sind dem Fachmann unter dem Begriff physikalische Intumeszenz bekannt und werden ebenfalls erfindungsgemäß eingesetzt. Beide Systeme können jeweils alleine oder zusammen als Kombination erfindungsgemäß eingesetzt werden.

Gemäß vorliegender Erfindung umfasst das Dichtprofil ein intumeszierfähiges Material. Erfindungsgemäß ist das intumeszierfähige Material ein intumeszierender Schaum.

In einer bevorzugten Ausführungsform des erfindungsgemäßen Fugendichtungselements besteht das Dichtprofil aus einem offenzelligen intumeszierenden Schaum.

In einer weiteren, bevorzugten Ausführungsform des erfindungsgemäßen Fugendichtungselements besteht das Dichtprofil aus einem geschlossenzelligen intumeszierenden Schaum.

In einer besonderen bevorzugten Ausführungsform des erfindungsgemäßen Fugendichtungselements besteht das Dichtprofil aus einem offenzelligen intumeszierenden Polyurethanschaum.

In einer weiteren, besonderen bevorzugten Ausführungsform des erfindungsgemäßen Fugendichtungselements besteht das Dichtprofil aus einem intumeszierenden Zellkautschuk.

Das Trägerelement besteht aus einem Kunststoff. Am bevorzugtesten ist, dass das Trägerelement aus Polyvinylchlorid besteht.

Das Trägerelement kann einstückig aus einem Material oder mehrteilig, auch aus verschiedenen Materialien hergestellt werden. Bevorzugt ist, dass das Trägerelement einstückig hergestellt wird.

Das erfindungsgemäße Fugendichtungselement kann einstückig aus einem Material oder mehrteilig, auch aus verschiedenen Materialien hergestellt werden. Bevorzugt ist, dass das Fugendichtungselement aus mehreren Einheiten/Materialien besteht. Besonders bevorzugt ist, dass das Dichtprofil aus verformbarem Material und das Trägerelement aus Kunststoff besteht.

Das Dichtprofil des erfindungsgemäßen Fugendichtungselements ist zumindest über einen Teil seines Umfangs fest von einer Deckschicht oder Ummantelung, beispielsweise aus einer Folie, insbesondere Kunststofffolie, umgeben. So kann ein offenzelliges Schaummaterial für das Dichtprofil verwendet werden.

In einer weiteren Ausführungsform des erfindungsgemäßen Fugendichtungselements ist das Dichtprofil zumindest über einen Teil seines Umfangs fest mit dem Trägerelement verbunden. Hierdurch wird eine feste Verbindung zwischen dem Trägerelement und dem Dichtprofil geschaffen, so dass auch bei starker Beanspruchung des Befestigungsbereichs und bei einem teilweisen Lösen des Dichtprofils von dem Trägerelement verhindert wird, dass sich das Dichtprofil vollständig von dem Trägerelement löst.

In einer weiteren Ausführungsform des erfindungsgemäßen Fugendichtungselements ist das Dichtprofil über seinen gesamten Umfang fest mit dem Trägerelement verbunden. Hierdurch wird zum einen eine optimale und dauerhafte Befestigung des Dichtprofils an dem Trägerelement erreicht, das ein Ablösen des Dichtprofils von dem Trägerelement nahezu unmöglich macht. Zum anderen kann, wenn das Trägermaterial rauchgasdicht ist, ein offenzelliges Schaummaterial für das Dichtprofil verwendet werden.

Es ist bevorzugt, dass das Dichtprofil am Trägerelement angeordnet ist, bevorzugter dass das Dichtprofil am äußeren Rand des Trägerelements angeordnet ist.

Das Fugendichtungselement der vorliegenden Erfindung, insbesondere das Trägerelement des Fugendichtungselements, weist vorzugsweise zumindest einen, in Richtung der Längenerstreckung der Fuge verlaufenden, Befestigungsbereich auf, zur Befestigung des Fugendichtungselements an einem randseitig an der Fuge liegenden Konstruktionselement der Baukonstruktion und/oder des Bauwerks. Es ist bevorzugt, dass der zumindest eine Befestigungsbereich des Fugendichtungselements texturiert, perforiert oder mit Löchern versehen ist. Besondern bevorzugt ist das der zumindest eine Befestigungsbereich des Fugendichtungselements mit Löchern versehen ist. Die Löcher dienen zur Befestigung des Fugendichtungselements mit Hilfe von Gipsspachtel an die obere, äußere Abschlusskante des ersten Bauteils, insbesondere eine Gipskartonplatte.

Das Fugendichtungselement der vorliegenden Erfindung umfasst gegebenenfalls eine Positionierungs- und/oder Befestigungshilfe in Form einer Lamelle, einer Nase, einer Kante, einer Sicke, eines Winkels und eines Hakens. Diese Positionierungs- und/oder Befestigungshilfe dient zur sauberen Positionierung und Befestigung des Fugendichtungselements und kann nach der Verspachtelung, mit beispielsweise Gips, rückstandsfrei nach erfolgter Installation abgetrennt werden. Bevorzugt ist, dass das Fugendichtungselement der vorliegenden Erfindung eine abtrennbare Anspachtelkante aufweist, die vorzugsweise im Verbundbereich von Trägerelement und Dichtprofil angebracht ist. Eine solche Anspachtelkante erleichtert die Montage und erlaubt sauberes Abdichten der Anschlussfuge, um eine Sichtfuge mit Brandschutzfunktion bereitzustellen. Eine solche Positionierungs- und/oder Befestigungshilfe kann aus ein Kunststoff, einer Kunststofffolie, einem Metall, einem Gewebe, einem Vlies oder dergleichen bestehen. Vorzugsweise besteht die Anspachtelkante aus Kunststoff.

Das erfindungsgemäße Verfahren zur brandsicheren Abdichtung einer Fuge zwischen zwei aneinander anliegenden Bauteilen einer Baukonstruktion und/oder eines Bauwerkes mit wenigstens einem ersten Bauteil, einem zweiten Bauteil und dem erfindungsgemäßen Fugendichtungselement ist dadurch gekennzeichnet, dass das Fugendichtungselement in einem ersten Schritt an einer Abschlusskante des ersten Bauteils, insbesondere einer Trockenbauwand, bevorzugt einer Gipskartonplatte, positioniert wird und in einem zweiten Schritt befestigt. Vorzugsweise umfasst der erste Schritt Positionieren durch Kleben, Schrauben, Dübeln, Klammern und Nageln. Insbesondere ist das Trägerelement an der oberen, nach außen gewandten, horizontalen Abschlusskante einer Gipskartonplatte bündig zu positionieren. Die Positionierung des Fugendichtungselements an das erste Bauteil kann auch durch Mittel zur Befestigung erfolgen, beispielsweise in Form von einer Klebeschicht, insbesondere eine Selbstklebeschicht, in Form von form- oder kraftschlüssig wirkenden Mitteln, wie geeignete Profilierungen oder ein Puttymaterial, mittels einem separat anwendbaren Kleber oder dergleichen. Die Positionierung des erfindungsgemäßen Fugendichtungselements kann flächig oder nur punktuell ausgeführt werden. Vorzugsweise umfasst der zweite Schritt Befestigen durch Verspachteln, insbesondere mittels Gipsspachtel.

Die Dimension und die Materialen des Fugendichtungselements werden entsprechend der geplanten Verwendung des Fugendichtungselements gewählt.

Im Allgemeinen wird die Dimension des Fugendichtungselements in Abhängigkeit der verwendeten Profile und des verwendeten Materials gewählt. Die Dimension muss so gewählt werden, dass das Fugendichtungselement den Spalt zwischen der Gipskartonplatte und der Decke ausfüllt und abdichtend sowohl an der Decke als auch an der Gipskartonplatte anliegt. Soll eine vertikale Bewegung der Gipskartonplatten zugelassen werden, muss das Fugendichtungselement der Bewegung der Gipskartonplatte folgen, damit der Kontakt mit der Gipskartonplatte nicht abreißt und keine Lücke zwischen Fugendichtungselement und Gipskartonplatte entstehen kann. Hierzu besteht das Dichtprofil des Fugendichtungselements bevorzugt aus rückstellfähigem und komprimierbarem Material und wird bei der Montage entsprechend vorkomprimiert, damit einer Abwärtsbewegung der Gipskartonplatte, wodurch der Spalt zwischen dieser und der Decke vergrößert wird, gefolgt werden kann. Die voreingestellte Bewegungsfreiheit der Gipskartonplatte bestimmt somit die Dimension des Dichtprofils und somit des Fugendichtungselements.

Beispielhaft soll erwähnt sein, dass die Höhe des Dichtprofils in Abhängigkeit der gewünschten Anwendung des Fugendichtungselements gewählt wird, wobei bei einfacher Beplankung die Höhe etwa in der Dicke einer Gipskartonplatte und bei doppelter Beplankung die Höhe etwa in der doppelten Dicke einer Gipskartonplatte gewählt wird. Es ist aber auch möglich, bei einfacher Beplankung das für die doppelte Beplankung ausgelegte Fugendichtungselement zu verwenden.

Beispielhaft soll auch erwähnt werden, dass Material und Geometrie des Dichtprofils für eine Bodenanwendung derart gewählt werden können, dass dessen Härte bzw. Komprimierbarkeit so eingestellt ist, dass allein durch das Eigengewicht der Gipskartonplatte im Bodenbereich der Dichtprofile auf eine definierte Höhe zusammengedrückt wird, beispielsweise durch einen zweilagigen Aufbau des Dichtprofils aus Schaumstoffen mit unterschiedlicher Stauchdichte. Damit kann ohne weiteres Messen ein korrekter Abstand zwischen Boden und Gipskarton eingestellt werden. Dies ist insbesondere dann erforderlich, wenn eine Beschädigung der Gipskartonplatte durch aufsteigende Nässe verhindert werden soll.

Im Folgenden wird die Erfindung anhand der Anwendung des Fugendichtungselements auf eine Trockenbauwand eines Trockenbauständerwerks - Dichtanordnung - näher beschrieben, ohne dass hierdurch der Schutzbereich eingeschränkt wird.

Zum Erstellen einer erfindungsgemäßen Dichtanordnung, zur brandsicheren Abdichtung einer Fuge zwischen zwei aneinander anliegenden Bauteilen einer Baukonstruktion und/oder eines Bauwerkes mit wenigstens einem ersten Bauteil, einem zweiten Bauteil und dem erfindungsgemäßen Fugendichtungselement, wird das Dichtprofil im äußeren Bereich der Fuge, vorzugsweise am ersten Bauteil, positioniert und ist dazu konfiguriert, die Fuge von außen abzudichten.

Es ist bevorzugt, dass das Trägerelement am oberen Rand der Außenseite des ersten Bauteils angeordnet ist, insbesondere an der oberen Abschlusskante der Außenseite des ersten Bauteils. Bevorzugt ist das Trägerelement an der oberen, nach außen gewandten, horizontalen Abschlusskante einer Gipskartonplatte bündig zu positionieren und zu befestigen.

Gemäß vorliegender Erfindung ist bevorzugt, dass das erste Bauteil eine Trockenbauwand, vorzugsweise eine Gipskartonplatte, und das zweite Bauteil eine Wand, eine Decke oder ein Boden, vorzugsweise eine Decke, einer Baukonstruktion und/oder eines Bauwerkes ist.

Gemäß vorliegender Erfindung wird das erfindungsgemäße Fugendichtungselement nach Fertigstellung des Trockenbauständers positioniert und befestigt, um so eine Sichtfuge mit zusätzlicher Brandschutzfunktion zu erzeugen. Mit dieser Anordnung ist das Fugendichtungselement im äußeren Bereich der Fuge positioniert und dazu konfiguriert, die Fuge von außen brandschutzsicher abzudichten. Bei dieser Anordnung des Fugendichtungselements können Unebenheiten in allen Bauteilen ausgeglichen werden.

Erfindungsgemäß lässt sich das Fugendichtungselement auf alle Arten von Anschlussfugen, bei denen ein Bauteil auf ein anderes Bauteil trifft, anwenden. Dementsprechend lässt sich das Fugendichtungselement auf alle Profile, auch geschlossene Profile oder Holzbalken, anwenden, die zu einer Anschlussfläche abgedichtet werden müssen.

Eine besonders bevorzugte Anwendung des Fugendichtungselements betrifft die Abdichtung der Profile im Trockenbau, wobei das erste Bauteil eine Trockenbauwand ist, beispielsweise ein oder mehrere Gipskartonplatten, und das zweite Bauteil eine Wand, eine Decke oder ein Boden eines Bauelements, beispielsweise ein Mauerwerk oder Betonbauelement, ist. Ein weiteres Bauteil ist ein Profil für die Positionierung und Befestigung der Gipskartonplatte, wobei es sich um irgendeines der üblicherweise verwendeten Profile für den Trockenbau handeln kann, unabhängig davon, ob es einen geschlitzten oder ungeschlitzten Steg zw. geschlitzte oder ungeschlitzte Flansche aufweist. Um eine vertikale Bewegung der Gipskartonplatten, etwa im Falle eines Erdbebens, zuzulassen, werden die Gipskartonplatten auf Abstand zu einer Wand, einem Boden oder einer Decke, vertikal beweglich montiert. Dadurch entsteht eine Lücke (hierin auch Fuge genannt) zwischen der Gipskartonplatte und der Wand, dem Boden oder der Decke. Diese Fuge wird durch das Dichtprofil des Fugendichtungselements ausgefüllt, so dass das Dichtprofil die Fuge gegen Rauch und Feuer abdichtet.

Ohne den Schutzumfang der Erfindung einzuschränken, wird die Erfindung anhand spezieller Ausführungsformen des Fugendichtungselements sowie seiner Positionierung näher beschrieben. In diesen Ausführungsformen wird das Fugendichtungselement auf die Anschlussfugen bei Trockenbauwänden angewendet. Dem Fachmann ist klar, dass das Fugendichtungselement auch auf andere geartete Bauwerksfugen angewendet werden kann.

In Figur **1** ist eine bevorzugte Ausführungsform eines erfindungsgemäßen Fugendichtungselements 1 gezeigt. Das Fugendichtungselement 1 weist ein Dichtprofil 3 auf, das am äußeren Rand des Trägerelements 2 positioniert ist. Das Dichtprofil 3 weist ein Rundprofil und ein Vollprofil auf, wobei das Trägerelement 2 längsseitlich an dem runden Dichtprofil 3 positioniert ist. Das Trägerelement 2 hat einen, in Richtung der Längenerstreckung der Fuge verlaufenden, Befestigungsbereich 4, zur Befestigung des Fugendichtungselements 1 an einem randseitig an der Fuge liegenden Konstruktionselement einer Baukonstruktion und/oder eines Bauwerks. Der Befestigungsbereich 4 des Trägerelements 2 ist mit Löchern 5 versehen. Weiter ist das Dichtprofil 3 vollständig, d.h. über seinem vollen Umfang von einer Kunststofffolie 6 umgeben, die das Dichtprofil 3 an das Trägerelement 2 befestigt. Das Dichtprofil 3 besteht aus einem komprimierbaren Schaumstoff 7, der Brandschutzadditive enthält, und das Trägerelement 2 aus Kunststoff.

In Figur **2** ist eine Dichtanordnung mit einem Fugendichtungselement 1 gemäß einer Ausführungsform der vorliegenden Erfindung gezeigt. Insbesondere zeigt Figur 2 die Positionierung einer Ausführungsform des erfindungsgemäßen Fugendichtungselements 1 in einer Anschlussfuge bei Trockenbauwänden mit einfacher Beplankung. Die Dichtanordnung in Figur 2 zur brandsicheren Abdichtung einer Fuge zwischen zwei aneinander anliegenden Bauteilen einer Baukonstruktion und/oder eines Bauwerkes mit wenigstens einem ersten Bauteil 8, einem zweiten Bauteil 9 und einem Fugendichtungselement 1 zeigt, dass das Dichtprofil 3 im äußeren Bereich der Fuge, am zweiten Bauteil 9, positioniert und dazu konfiguriert ist, die Fuge von außen abzudichten. Insbesondere wird zur brandsicheren Abdichtung des Spalts zwischen einer Decke 9, dem U-Profil 10 eines Trockenbauständerwerks und der Gipskartonplatte 8 in dem ersten Schritt das Fugendichtungselement 1 in der Fuge, an der Abschlusskante 11 des ersten Bauteils 8 positioniert und in einem zweiten Schritt befestigt, d.h. der Befestigungsbereich 4 wird verspachtelt. Dadurch dichtet das Dichtprofil 3 so den Spalt zwischen der Decke 9 und dem U-Profil 10 und den Spalt zwischen der Decke 9 und der Gipskartonplatte 8 ab. Das Fugendichtungselement 1 in Figur 2 weist ein Dichtprofil 3 auf, das am äußeren Rand des Trägerelements 2 positioniert ist. Das Dichtprofil 3 weist ein Vollprofil und Ovalprofil auf. Das Trägerelement 2 hat einen, in Richtung der Längenerstreckung der Fuge verlaufenden, Befestigungsbereich 4, zur Befestigung des Fugendichtungselements 1 an einem randseitig an der Fuge liegenden Konstruktionselement 8 einer Baukonstruktion und/oder eines Bauwerks. Der Befestigungsbereich 4 des Trägerelements 2 ist mit Löchern 5 versehen. Weiter ist das Dichtprofil 3 vollständig, d.h. über seinem vollen Umfang von einer Kunststofffolie 6 umgeben, die das Dichtprofil 3 an das Trägerelement 2 befestigt. Das Dichtprofil 3 besteht aus einem komprimierbaren, intumeszierenden Schaumstoff 7, der Brandschutzadditive enthält, und das Trägerelement 2 aus Kunststoff.

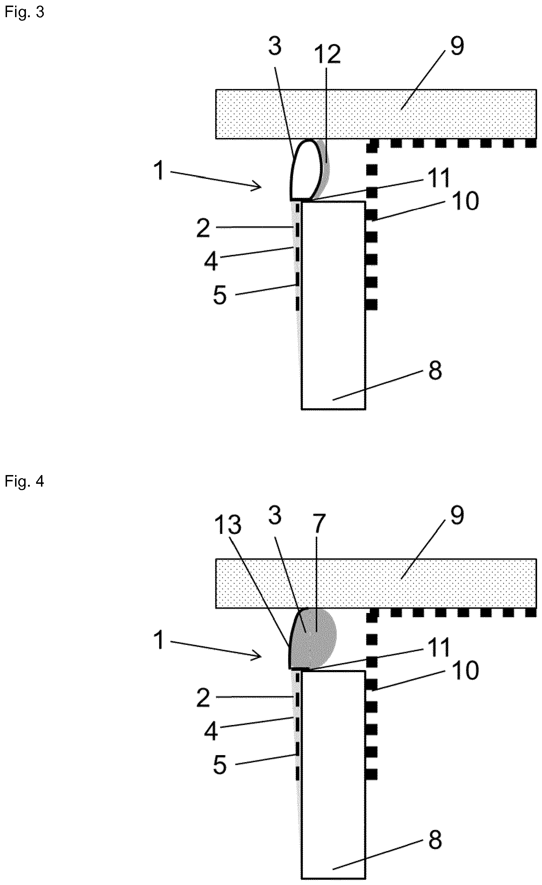

Figuren **3** bis **6** zeigen weitere Dichtanordnungen mit Fugendichtungselementen 1. Insbesondere zeigen Figuren **3** bis **6** Positionierungen verschiedener Ausführungsformen des Fugendichtungselements 1 in Anschlussfugen bei Trockenbauwänden mit einfacher Beplankung, ähnlich wie für Figur 2 beschrieben. Das Dichtprofil 3 vom Fugendichtungselement 1 in Figur **3** weist ein Hohlprofil und Ovalprofil auf, wobei das Hohlprofil innenseitig mit einem intumeszierenden Streifen 12 versehen ist. Das Trägerelement 2 hat einen, in Richtung der Längenerstreckung der Fuge verlaufenden, Befestigungsbereich 4, zur Befestigung des Fugendichtungselements 1 an einem randseitig an der Fuge liegenden Konstruktionselement 8 einer Baukonstruktion und/oder eines Bauwerks. Der Befestigungsbereich 4 des Trägerelements 2 ist mit Löchern 5 versehen. Das Dichtprofil 3 und das Trägerelement 2 bestehen aus Kunststoff, beispielsweise Polyvinylchlorid.

Das Dichtprofil 3 vom Fugendichtungselement 1 in Figur **4** umfasst eine Dichtlippe 13, die mit komprimierbaren, intumeszierenden 7 Schaumstoff hinterfüllt ist. Das Trägerelement 2 hat einen, in Richtung der Längenerstreckung der Fuge verlaufenden, Befestigungsbereich 4, zur Befestigung des Fugendichtungselements 1 an einem randseitig an der Fuge liegenden Konstruktionselement 8 einer Baukonstruktion und/oder eines Bauwerks. Der Befestigungsbereich 4 des Trägerelements 2 ist mit Löchern 5 versehen. Die Dichtlippe 13 und das Trägerelement 2 bestehen aus Kunststoff, beispielsweise Polyvinylchlorid.

Das Dichtprofil 3 vom Fugendichtungselement 1 in Figur **5** umfasst eine Dichtlippe 11, die mit einem intumeszierenden Streifen 12 beschichtet ist. Das Trägerelement 2 hat einen, in Richtung der Längenerstreckung der Fuge verlaufenden, Befestigungsbereich 4, zur Befestigung des Fugendichtungselements 1 an einem randseitig an der Fuge liegenden Konstruktionselement 8 einer Baukonstruktion und/oder eines Bauwerks. Der Befestigungsbereich 4 des Trägerelements 2 ist mit Löchern 5 versehen. Die Dichtlippe 13 und das Trägerelement 2 bestehen aus Kunststoff, beispielsweise Polyvinylchlorid.

Das Dichtprofil 3 vom Fugendichtungselement 1 in Figur **6** weist ein Vollprofil und Ovalprofil auf, wobei das Fugendichtungselement 1 mit einer abtrennbaren Anspachtelkante 14 versehen ist. Das Trägerelement 2 hat einen, in Richtung der Längenerstreckung der Fuge verlaufenden, Befestigungsbereich 4, zur Befestigung des Fugendichtungselements 1 an einem randseitig an der Fuge liegenden Konstruktionselement 8 einer Baukonstruktion und/oder eines Bauwerks. Der Befestigungsbereich 4 des Trägerelements 2 ist mit Löchern 5 versehen. Das Dichtprofil 3 besteht aus einem komprimierbaren, intumeszierenden Schaumstoff 7, der Brandschutzadditive enthält, und das Trägerelement 2 aus Kunststoff.

Figur **7** zeigt eine skizzierte perspektivische Ansicht einer Dichtanordnung mit der in Figur 1 gezeigten Ausführungsform eines erfindungsgemäßen Fugendichtungselements 1.

Figur **8** zeigt eine skizzierte perspektivische Ansicht einer Dichtanordnung mit der in

Figur 5 gezeigten Ausführungsform eines Fugendichtungselements 1, mit schon verspachteltem Bereich 15.

Jegliche oben erwähnte geometrische sowie materielle Ausgestaltung des Dichtprofils und des Trägerelements sind beliebig kombinierbar und einsetzbar, um ein Fugendichtungselement gemäß der vorliegenden Erfindung bereitzustellen.

Wie aus dem oben Ausgeführten ersichtlich wird, eignet sich das erfindungsgemäße Fugendichtungselement besonders dazu, in einfacher Weise eine Bauwerksfuge zwischen zwei aneinandergrenzenden Bauteilen sicher abzudichten, insbesondere gegen Rauch und Feuer.

Das Fugendichtungselement der vorliegenden Erfindung lässt sich gut komprimieren und verformen, und dadurch kann ein verbesserter Ausgleich von Unebenheiten, ein verbesserten Einbau, z. B. einfaches Positionieren und Befestigen, sowie eine verbesserte Abdichtung, z. B. wenn mehrere Fugendichtungselemente aneinander auf Stoß gesetzt werden, erzielt werden. Insbesondere kann das Fugendichtungselement der vorliegenden Erfindung auch einen Versatz bei den vormontierten Gipskartonplatten ausgleichen.

Die Erfindung ermöglicht es, ein Fugendichtungselement mit Brandschutzfunktion für Bewegungsfugen bereitzustellen und gleichzeitig mit einem ansprechendem Erscheinungsbild für den Sichtbereich, das den architektonischen Baustil mit integrierten Brandschutzanforderungen komplettiert.

Das Verfahren zur Abdichtung einer Fuge ermöglicht eine einfache Durchführung und führt mit geringerem Arbeitsaufwand zuverlässig und fehlerfrei zur brandsicheren Abdichtung einer Fuge zwischen zwei aneinander anliegenden Bauteilen einer Baukonstruktion und/oder eines Bauwerkes. Insbesondere ermöglicht die vorliegende Erfindung einen fast werkzeugfreien, einstufigen Installationsprozess; Brandschutz und optisch ansprechender Abschluss wird in einem Arbeitsprozess installiert. Die Verspachtelung ist direkt möglich, wobei kein zusätzlicher Papier oder Gitterstreifen notwendig ist. Weiter ist auch eine Dichtmasse für den Installationsprozess nicht notwendig. Das schnelle Überstreichen des Befestigungsbereiches erfolgt leicht durch geeignete Materialauswahl und resultiert in einer optisch ansprechenden Sichtfuge mit integrierter Brandschutzfunktion. Eine einfache Inspektion kann durch eine Bedruckung der Anspachtelkante ermöglicht werden, die auch einen sauberen Abschluss der Sichtfuge garantiert.

Darüber hinaus hat sich gezeigt, dass die Anwendung ist sehr montagefreundlich, da keine zusätzliche Befestigung des Fugendichtungselements etwa an dem Profil oder an der Decke notwendig ist. Ein passgenaues Anlegen des Fugendichtungselements etwa an ein Profil oder eine Decke ist aufgrund der Fixierung und Befestigung des Fugendichtungselements bei der Montage ebenfalls nicht notwendig. Die Montage ist daher denkbar einfach und der Arbeitsaufwand zur Montage des Fugendichtungselements ist deutlich reduziert. Mit der Erfindung wird daher eine sichere und zuverlässige brandsichere Abdichtung von Fugen zwischen zwei Bauteilen, insbesondere zwischen einer Gipskartonplatte eines Trockenbauständerwerks und einem daran angrenzenden Bauteil, wie etwa eine Decke, Wand oder ein Boden, erreicht.

Es hat sich gezeigt, dass die Dichtanordnung im Brandfall eine bessere Abdichtung der Fuge zwischen zwei Bauteilen, insbesondere zwischen einer Trockenbauwand und einem Anschlussbauteil, wie eine Wand, eine Decke oder ein Boden, ermöglicht und so eine bessere und dauerhafte Abdichtung gegenüber Schall und/oder Rauch sowie einen besseren und dauerhaften Brandschutz bereitstellt und mit geringerem Arbeitsaufwand zuverlässig und fehlerfrei montiert werden kann.

Weiterhin hat sich gezeigt, dass mit dem erfindungsgemäßen Fugendichtungselement hervorragende Dichtigkeiten erzielt werden können, da eine gute Komprimierbarkeit der Dichtprofile durch Auswahl der Dichtmaterialien und/oder Geometriegestaltung ohne zusätzliche Hilfsmittel gewährleistest ist.

Mit dem erfindungsgemäßen Fugendichtungselement kann auch sichergestellt werden, das bereits durch die Auswahl der Dichtmaterialien und/oder Geometriegestaltung genügend Material installiert wird, um eine hervorragende Dichtigkeit bei maximaler Bewegungsaufnahme zu gewährleisten.

Mit dem erfindungsgemäßen Fugendichtungselement können ferner Unebenheiten einer Bauteiloberfläche bereits beim Anordnen eines Bauteils an ein anderes Bauteil sicher abgedichtet werden, da die Dichtprofile des Fugendichtungselements ausreichend fest an die Oberfläche des einen Bauteils und gleichzeitig an die Seitenflächen des anderen Bauteils angepresst werden.

In Anbetracht des Vorstehenden ist ersichtlich, dass die Aufgaben der Erfindung gelöst werden. Da verschiedene Änderungen an dem oben beschriebenen Fugendichtungselement gemacht werden können, ohne vom Umfang der beigefügten Ansprüche abzuweichen, ist es beabsichtigt, dass alle in der obigen Beschreibung enthaltenen Gegenstände als illustrativ und nicht in einem einschränkenden Sinne interpretiert werden.

## Patentansprüche

1. Fugendichtungselement (1) zum brandsicheren Verschließen einer Fuge an einer Baukonstruktion und/oder an einem Bauwerk, insbesondere zum brandsicheren Verschließen einer Fuge zwischen einem ersten Bauteil und einem zweiten Bauteil, wobei das Fugendichtungselement ein Trägerelement (2) und ein an dieses Trägerelement (2) angeordnetes Dichtprofil (3) umfasst, wobei das angeordnete Dichtprofil (3) aus einem verformbaren Material besteht und ein intumeszierfähiges Material umfasst, **dadurch gekennzeichnet, dass** das Dichtprofil (3) ein Vollprofil oder Hohlprofil aufweist, wobei das Dichtprofil (3) über seinem vollen Umfang von einer Kunststofffolie (6) umgeben ist, die das Dichtprofil (3) an das Trägerelement (2) befestigt, wobei das Dichtprofil (3) aus einem komprimierbaren, intumeszierenden Schaumstoff (7) besteht, der Brandschutzadditive enthält, wobei das Trägerelement (2) aus Kunststoff ist.

2. Fugendichtungselement (1) nach Anspruch 1, **dadurch gekennzeichnet, dass** das Dichtprofil (3) am äußeren Rand des Trägerelements (2) angeordnet ist.

3. Fugendichtungselement (1) nach einem der vorhergehenden Ansprüche, **dadurch gekennzeichnet, dass** das Dichtprofil (3) ein Rundprofil oder Mehreckprofil, insbesondere Rechteckprofil, Quadratprofil, Parallelogrammprofil oder Dreieckprofil, bevorzugt ein Rundprofil, aufweist.

4. Fugendichtungselement (1) nach Anspruch 1 oder 2, **dadurch gekennzeichnet, dass** das Dichtprofil (3) eine Dichtlippe (13) umfasst.

5. Fugendichtungselement (1) nach einem der vorhergehenden Ansprüche, **dadurch gekennzeichnet, dass** das verformbare Material ein langsam abbrennbarer Schaumstoff ist.

6. Fugendichtungselement (1) nach einem der vorhergehenden Ansprüche, **dadurch gekennzeichnet, dass** das Trägerelement (2) zumindest einen, in Richtung der Längenerstreckung der Fuge verlaufenden, Befestigungsbereich (4) aufweist, zur Befestigung des Fugendichtungselements (1) an einem randseitig an der Fuge liegenden Konstruktionselement der Baukonstruktion und/oder des Bauwerks.

7. Fugendichtungselement (1) nach Anspruch 6, **dadurch gekennzeichnet, dass** der zumindest eine Befestigungsbereich (4) des Fugendichtungselements texturiert, perforiert oder mit Löchern (5) versehen ist.

8. Fugendichtungselement (1) nach einem der vorhergehenden Ansprüche, **dadurch gekennzeichnet, dass** das Fugendichtungselement (1) gegebenenfalls eine Positionierungs- und/oder Befestigungshilfe (14) in Form einer Lamelle, einer Nase, einer Kante, einer Sicke, eines Winkels und eines Hakens umfasst.

9. Fugendichtungselement (1) nach Anspruch 8, **dadurch gekennzeichnet, dass** Positionierungs- und/oder Befestigungshilfe (14) in Form einer Anspachtelkante ist.

10. Verfahren zur brandsicheren Abdichtung einer Fuge zwischen zwei aneinander anliegenden Bauteilen einer Baukonstruktion und/oder eines Bauwerkes mit wenigstens einem ersten Bauteil (8), einem zweiten Bauteil (9) und einem Fugendichtungselement (1) nach einem der Ansprüche 1 bis 9, **dadurch gekennzeichnet, dass** das Fugendichtungselement (1) in einem ersten Schritt an einer Abschlusskante (11) des ersten Bauteils (8) positioniert wird und in einem zweiten Schritt befestigt wird.

11. Verfahren nach Anspruch 10, **dadurch gekennzeichnet, dass** der erste Schritt Positionieren durch Kleben, Nageln, Schrauben, Klammern und Dübeln umfasst.

12. Verfahren nach Anspruch 10, **dadurch gekennzeichnet, dass** der zweite Schritt Befestigen durch Verspachteln umfasst.

13. Dichtanordnung zur brandsicheren Abdichtung einer Fuge zwischen zwei aneinander anliegenden Bauteilen einer Baukonstruktion und/oder eines Bauwerkes mit wenigstens einem ersten Bauteil (8), einem zweiten Bauteil (9) und einem Fugendichtungselement (1) nach einem der Ansprüche 1 bis 9, **dadurch gekennzeichnet, dass** das Dichtprofil (3) im äußeren Bereich der Fuge, vorzugsweise am zweiten Bauteil (9), positioniert und dazu konfiguriert ist, die Fuge von außen abzudichten.

14. Dichtanordnung nach Anspruch 13, **dadurch gekennzeichnet, dass** das erste Bauteil (8) eine Trockenbauwand und das zweite Bauteil (9) eine Wand, eine Decke oder ein Boden, vorzugsweise eine Decke, einer Baukonstruktion und/oder eines Bauwerkes ist.

## Claims

1. Joint sealing element (1) for sealing a joint on a building structure and/or construction in a fire-proof manner, in particular for sealing a joint between a first component and a second component in a fire-proof manner, the joint sealing element comprising a carrier element (2) and a sealing profile (3) arranged on said carrier element (2), the arranged sealing profile (3) consisting of a deformable material and comprising an intumescent material, **characterized in that** the sealing profile (3) has a solid profile or a hollow profile, the sealing profile (3) being surrounded by a plastics film (6) over the entire circumference thereof, which film fastens the sealing profile (3) to the carrier element (2), the sealing profile (3) consisting of a compressible, intumescent foam (7) which contains fire protection additives, and the carrier element (2) being made of plastics material.

2. Joint sealing element (1) according to claim 1, **characterized in that** the sealing profile (3) is arranged on the outer edge of the carrier element (2).

3. Joint sealing element (1) according to either of the preceding claims, **characterized in that** the sealing profile (3) has a round profile or a polygonal profile, in particular a rectangular profile, a square profile, a parallelogram profile or a triangular profile, preferably a round profile.

4. Joint sealing element (1) according to either claim 1 or claim 2, **characterized in that** the sealing profile (3) comprises a sealing lip (13).

5. Joint sealing element (1) according to any of the preceding claims, **characterized in that** the deformable material is a slow-burning foam.

6. Joint sealing element (1) according to any of the preceding claims, **characterized in that** the carrier element (2) has at least one fastening region (4) extending in the direction of the longitudinal extension of the joint, for fastening the joint sealing element (1) to a structural element of the building structure and/or construction that is located at the edge of the joint.

7. Joint sealing element (1) according to claim 6, **characterized in that** the at least one fastening region (4) of the joint sealing element is textured, perforated or provided with holes (5).

8. Joint sealing element (1) according to any of the preceding claims, **characterized in that** the joint sealing element (1) optionally comprises a positioning and/or fastening aid (14) in the form of a lamella, a lug, an edge, a bead, an angle and a hook.

9. Joint sealing element (1) according to claim 8, **characterized in that** the positioning and/or fastening aid (14) is in the form of a filler-guiding edge.

10. Method for sealing a joint between two adjacent components of a building structure and/or construction in a fire-proof manner, comprising at least one first component (8), a second component (9), and a joint sealing element (1) according to any of claims 1 to 9, **characterized in that** the joint sealing element (1) is positioned on an end edge (11) of the first component (8) in a first step and is fastened in a second step.

11. Method according to claim 10, **characterized in that** the first step comprises positioning by gluing, nailing, screwing, clamping and anchoring.

12. Method according to claim 10, **characterized in that** the second step comprises fastening by filling.

13. Sealing arrangement for sealing a joint between two adjacent components of a building structure and/or construction in a fire-proof manner, comprising at least one first component (8), a second component (9), and a joint sealing element (1) according to any of claims 1 to 9, **characterized in that** the sealing profile (3) is positioned in the outer region of the joint, preferably on the second component (9), and is configured to seal the joint from the outside.

14. Sealing arrangement according to either claim 13, **characterized in that** the first component (8) is a drywall and the second component (9) is a wall, a ceiling or a floor, preferably a ceiling, of a building structure and/or construction.

## Revendications

1. Élément d'étanchéité de joint (1) permettant la fermeture ignifuge d'un joint sur une structure de bâtiment et/ou un bâtiment, en particulier permettant la fermeture ignifuge d'un joint entre un premier composant et un second composant, l'élément d'étanchéité de joint comprenant un élément porteur (2) et un profilé d'étanchéité (3) disposé sur ledit élément porteur (2), le profilé d'étanchéité (3) disposé étant constitué d'un matériau déformable et comprenant un matériau intumescent, **caractérisé en ce que** le profilé d'étanchéité (3) présente un profilé plein ou un profilé creux, le profilé d'étanchéité (3) étant entouré, sur toute sa circonférence, d'un film plastique (6) qui fixe le profilé d'étanchéité (3) sur l'élément porteur (2), le profilé d'étanchéité (3) étant constitué d'une mousse intumescente compressible (7) contenant des additifs anti-incendie, l'élément porteur (2) étant en matière plastique.

2. Élément d'étanchéité de joint (1) selon la revendication 1, **caractérisé en ce que** le profilé d'étanchéité (3) est disposé sur le bord extérieur de l'élément porteur (2).

3. Élément d'étanchéité de joint (1) selon l'une des revendications précédentes, **caractérisé en ce que** le profilé d'étanchéité (3) présente un profilé rond ou un profilé polygonal, en particulier un profilé rectangulaire, un profilé carré, un profilé en parallélogramme ou un profilé triangulaire, de préférence un profilé rond.

4. Élément d'étanchéité de joint (1) selon la revendication 1 ou 2, **caractérisé en ce que** le profilé d'étanchéité (3) comprend une lèvre d'étanchéité (13).

5. Élément d'étanchéité de joint (1) selon l'une des revendications précédentes, **caractérisé en ce que** le matériau déformable est une mousse pouvant brûler lentement.

6. Élément d'étanchéité de joint (1) selon l'une des revendications précédentes, **caractérisé en ce que** l'élément porteur (2) présente au moins une zone de fixation (4) s'étendant dans la direction de l'extension longitudinale du joint et permettant de fixer l'élément d'étanchéité de joint (1) à un élément structurel reposant latéralement sur le joint de la structure de bâtiment et/ou du bâtiment.

7. Élément d'étanchéité de joint (1) selon la revendication 6, **caractérisé en ce que** l'au moins une zone de fixation (4) de l'élément d'étanchéité de joint est texturée, perforée ou munie de trous (5).

8. Élément d'étanchéité de joint (1) selon l'une des revendications précédentes, **caractérisé en ce que** l'élément d'étanchéité de joint (1) comprend éventuellement une aide au positionnement et/ou à la fixation (14) sous la forme d'une lamelle, d'un nez, d'un rebord, d'une moulure, d'un angle et d'un crochet.

9. Élément d'étanchéité de joint (1) selon la revendication 8, **caractérisé en ce que** l'aide au positionnement et/ou à la fixation (14) se présente sous la forme d'un rebord de remplissage.

10. Procédé permettant d'étanchéifier de manière ignifuge un joint entre deux composants reposant l'un contre l'autre d'une structure de bâtiment et/ou d'un bâtiment, comportant au moins un premier composant (8), un second composant (9) et un élément d'étanchéité de joint (1) selon l'une des revendications 1 à 9, **caractérisé en ce que** l'élément d'étanchéité de joint (1) est positionné sur un rebord terminal (11) du premier composant (8) lors d'une première étape et est fixé lors d'une seconde étape.

11. Procédé selon la revendication 10, **caractérisé en ce que** la première étape comprend le positionnement par collage, clouage, vissage, agrafage et goujonnage.

12. Procédé selon la revendication 10, **caractérisé en ce que** la seconde étape comprend la fixation par remplissage.

13. Dispositif d'étanchéité permettant d'étanchéifier de manière ignifuge un joint entre deux composants reposant l'un contre l'autre d'une structure de bâtiment ou d'un bâtiment, comportant au moins un premier composant (8), un second composant (9) et un élément d'étanchéité de joint (1) selon l'une des revendications 1 à 9, **caractérisé en ce que** le profilé d'étanchéité (3) est positionné dans la zone extérieure du joint, de préférence sur le second composant (9), et est conçu pour étanchéifier le joint depuis l'extérieur.

14. Dispositif d'étanchéité selon la revendication 13, **caractérisé en ce que** le premier composant (8) est une cloison sèche et le second composant (9) est un mur, un plafond ou un plancher, de préférence un plafond, d'une structure de bâtiment et/ou d'un bâtiment.
